# FASCICULE DE BREVET EUROPEEN

(11) **EP 3 402 862 B1**
(45) Date de publication et mention de la délivrance du brevet: **08.01.2025**
(21) Numéro de dépôt: 17702428.8
(22) Date de dépôt: 12.01.2017
(51) Int. Cl.: C10L 1/00, C10L 1/30, C10M 171/00, C10N 10/06, C10N 40/00

(54) **UTILISATION DE COMPLEXES DE TERRES RARES COMME MARQUEURS DE PRODUITS PÉTROLIERS, DE PÉTROLES BRUTS, DE BIOCARBURANTS OU DE LUBRIFIANTS**
VERWENDUNG VON SELTENERDKOMPLEXEN ALS MARKER VON ERDÖLPRODUKTEN, ROHÖLEN, BIOKRAFTSTOFFEN ODER SCHMIERMITTELN
USE OF RARE EARTH COMPLEXES AS MARKERS OF PETROLEUM PRODUCTS, CRUDE OILS, BIOFUELS OR LUBRICANTS

(30) Priorité: 12.01.2016 FR 1650208
(43) Date de publication de la demande: 21.11.2018
(73) Titulaire: Inoventeam, 62380 Affringues (FR); Université Claude Bernard Lyon 1, 69922 Villeurbanne (FR); Centre National de la Recherche Scientifique (CNRS), 75016 Paris (FR)
(72) Inventeur: MARAIS, Arthur, 56650 Lochrist (FR); OULD-METIDJI, Mahmoud, 13015 Marseille (FR); LEPOIVRE, Florian, 53000 Laval (FR); COLLET, Anatole, 26200 Montelimar (FR); MARTINI, Matteo, 01330 Villars Les Dombes (FR); ROSSETTI, Fabien, 69100 Villeurbanne (FR); TILLEMENT, Olivier, 69270 Fontaines Saint-Martin (FR); VANLAER, Antoine, 75004 Paris (FR); GHILLEBAERT, François, 62380 Affringues (FR)
(74) Mandataire: Plasseraud IP
(86) Numéro de dépôt international: PCT/FR2017/050062
(87) Numéro de publication internationale: WO 2017/121958

(56) Documents cités:
- EP-A1- 1 380 632
- EP-A1- 2 726 585
- WO-A1-2014/088898
- WO-A1-2015/104509
- WO-A2-2014/091144
- US-A- 3 794 473
- US-A- 4 374 120
- US-A- 5 525 516
- US-A- 5 998 211
- HAN CUI-TING ET AL: "Synthesis of rare earth metal complexes based on phenol ether bidentate ligands and polymerization of 2-vinylpyridine", POLYHEDRON, PERGAMON PRESS, OXFORD, GB, vol. 202, 16 April 2021 (2021-04-16), XP086574895, ISSN: 0277-5387, [retrieved on 20210416], DOI: 10.1016/J.POLY.2021.115219

## Description

### DOMAINE TECHNIQUE

La présente invention se rapporte au marquage de produits pétroliers, de pétroles bruts, de biocarburants ou de lubrifiants.

Plus précisément, cette invention concerne l'utilisation de complexes de terres rares comme marqueurs de produits pétroliers, de pétroles bruts, de biocarburants ou de lubrifiants. L'invention se rapporte également à un procédé de détection par fluorescence en temps résolu de ces marqueurs.

### ARRIERE-PLAN DE L'INVENTION

Les produits pétroliers sont couramment marqués par des substances afin de permettre une identification ultérieure de ces produits.

En particulier, afin d'éviter la fraude, les organismes gouvernementaux et autorités chargées de la réglementation marquent les produits pétroliers lors du paiement de la taxe d'accise. Les industriels peuvent également vouloir marquer leurs produits pétroliers afin de leur assurer une traçabilité.

Les marqueurs les plus couramment utilisés sont des colorants. La couleur du produit pétrolier est alors modifiée spécifiquement par l'ajout du marqueur et cette modification est visible à l'œil nu. Par exemple, le Solvent Yellow 124, un colorant jaune, est utilisé pour marquer certains gazoles et kérosène.

D'autres marqueurs non détectables à l'œil nu peuvent également être utilisés. Dans ce cas, les marqueurs sont détectables par des techniques d'analyse chimique telles que la spectrométrie par torche à plasma (ICP) et la chromatographie en phase liquide à haute performance (HPLC). Néanmoins, l'utilisation de ces techniques d'analyse requiert le plus souvent des préparations et/ou des techniques expérimentales lourdes, peu compatibles avec une détection rapide des marqueurs utilisés.

La fluorescence est une technique d'analyse intéressante car elle peut être réalisée facilement et ne nécessite pas de techniques expérimentales lourdes. Cette technique a déjà été utilisée pour détecter des marqueurs de produits pétroliers. Toutefois, les produits pétroliers présentent souvent intrinsèquement une fluorescence importante, dès lors, il devient difficile de différencier la fluorescence du marqueur de la fluorescence naturellement émise par les produits pétroliers. Cela requiert des concentrations importantes de marqueurs ou des composés capables d'émettre un signal dans des longueurs d'onde, notamment l'infrarouge, qui se distinguent de celles des composés fluorescents présents naturellement dans les produits pétroliers.

Le document WO96/22345 décrit des marqueurs de produits pétroliers qui sont dérivés du 2(3H)-furanone et qui sont détectés par fluorescence après addition d'un réactif. Ces marqueurs peuvent être détectés à une concentration de 10 ppm.

Le document WO2004/068113 décrit l'utilisation comme agents de marquage de produits pétroliers des molécules organiques à une concentration de 1 ppm. Ces marqueurs sont détectés par spectrométrie de mobilité ionique.

Le document WO96/10620 décrit des marqueurs de produits pétroliers à base de squaraine, phtalocyanine ou naphtalocyanine qui peuvent être utilisés à une concentration inférieure au ppm. Ils sont détectés par fluorescence dans le proche infrarouge.

Le document WO 2014/091144 décrit des traceurs fluorescents, solubles en phase aqueuse, pour le marquage des eaux d'injections de champs pétrolifères.

A la connaissance des inventeurs, la concentration des marqueurs effectivement utilisés dans les produits pétroliers reste importante pour un marquage efficace, et est souvent supérieure au ppm.

Un des objectifs de la présente invention est donc de fournir de nouveaux marqueurs, détectables à très faibles concentrations dans des pétroles bruts, des biocarburants, des lubrifiants ou des produits pétroliers, et notamment l'essence, le gazole, le fioul ou le kérosène.

Un autre objectif de l'invention est de fournir de nouveaux marqueurs de produits pétroliers, pétroles bruts, biocarburants ou lubrifiants, qui soient stables dans le temps, pour que leur utilisation soit optimale.

Un autre objectif de l'invention est de fournir des marqueurs de produits pétroliers, pétroles bruts, biocarburants ou lubrifiants qui répondent aux critères suivants :
- Différence relative du signal de marquage <5% après 3 mois à température ambiante ;
- Produit soluble et stable de -40 à +60°C ;
- Produit non volatil ;
- Produit chimiquement stable ;
- Pas de rétention sur colonne de silice ou charbon actif.

La présente invention vise également à fournir un procédé de marquage des produits pétroliers, pétroles bruts, biocarburants ou lubrifiants et un procédé de détection de ces marqueurs qui soient simples et qui puissent être facilement mis en œuvre.

### RESUME DE L'INVENTION

Ces objectifs, parmi d'autres, sont atteints par l'invention qui vise en premier lieu l'utilisation, comme marqueurs de produits pétroliers, pétroles bruts, biocarburants ou lubrifiants, de complexes de terres rares

L'invention porte également sur un procédé de détection par fluorescence en temps résolu de ces complexes dans les produits pétroliers, les pétroles bruts, les biocarburants ou les lubrifiants.

De façon inattendue, les inventeurs ont découvert que les complexes de terres rares pouvaient être utilisés comme marqueurs de produits pétroliers, pétroles bruts, biocarburants ou lubrifiants. En particulier, ces complexes peuvent être détectés simplement à des concentrations inférieures à 1 ppm et même à 100 ppb, voire même à 1 ppb. Avantageusement, ces complexes sont détectables par fluorescence en temps résolu, cette technique permettant une détection simple et rapide du marqueur dans un échantillon de produit pétrolier, pétrole brut, biocarburant ou lubrifiant.

### BREVE DESCRIPTION DES FIGURES

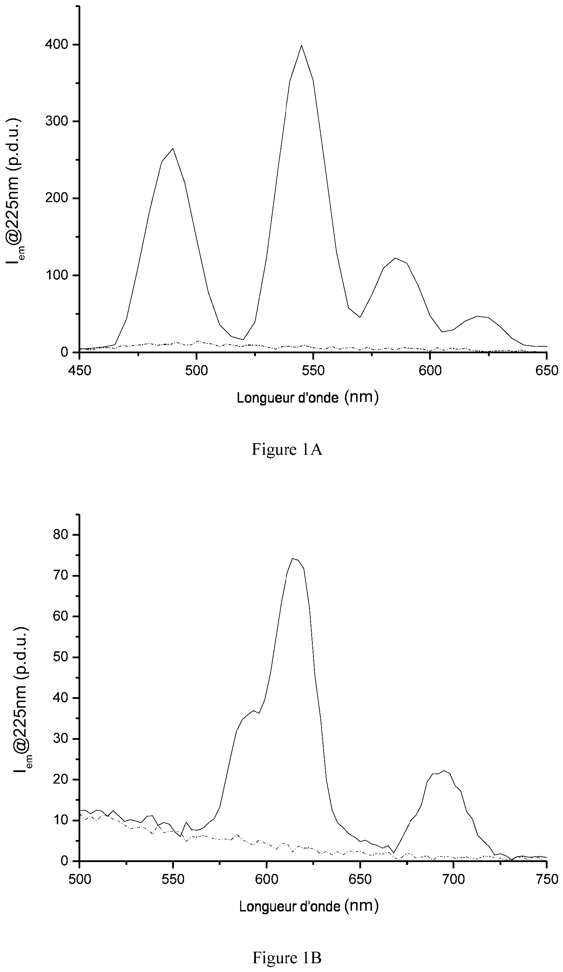

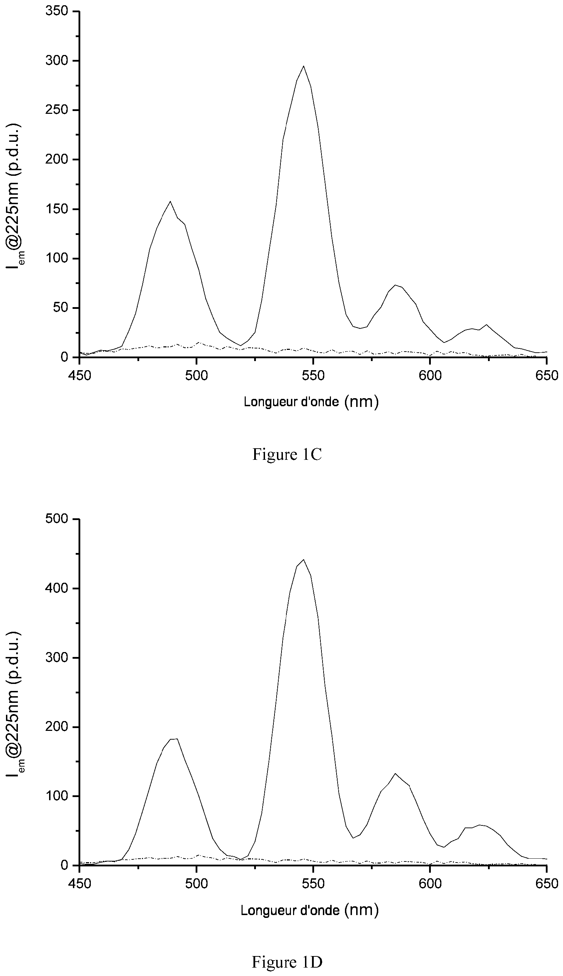

Sur la figure 1A est représenté en trait plein le spectre d'émission en temps résolu (délai 0,2 ms, temps d'acquisition 1 ms, temps de décroissance total 20 ms, accumulation de 0,2 s par point) sous excitation à 225 nm du marqueur DOTA(Tb) à 160 ppb dans le *n-*hexanol préparé selon l'exemple 5, et en trait discontinu la référence associée, correspondant à du *n*-hexanol, analysée dans les mêmes conditions. Sur la figure 1B est représenté en trait plein le spectre d'émission en temps résolu (délai 0,2 ms, temps d'acquisition 1 ms, temps de décroissance total 20 ms, accumulation de 0,5 s par point) sous excitation à 225 nm du marqueur DOTA(Eu) à 50 ppb dans le *n*-hexanol préparé selon l'exemple 4, et en trait discontinu la référence associée, correspondant à du *n-*hexanol, analysée dans les mêmes conditions. Sur la figure 1C est représenté en trait plein le spectre d'émission en temps résolu (délai 0,2 ms, temps d'acquisition 1 ms, temps de décroissance total 20 ms, accumulation de 0,2 s par point) sous excitation à 225 nm du marqueur PCTA(Tb) à 100 ppb dans le *n*-hexanol préparé selon l'exemple 2, et en trait discontinu la référence associée, correspondant à du *n*-hexanol, analysée dans les mêmes conditions. Sur la figure 1D est représenté en trait plein le spectre d'émission en temps résolu (délai 0,2 ms, temps d'acquisition 1 ms, temps de décroissance total 20 ms, accumulation de 0,2 s par point) sous excitation à 225 nm du marqueur TMPAC(Tb) à 100 ppb dans le *n*-hexanol préparé selon l'exemple 8, et en trait discontinu la référence associée, correspondant à du *n*-hexanol, analysée dans les mêmes conditions.

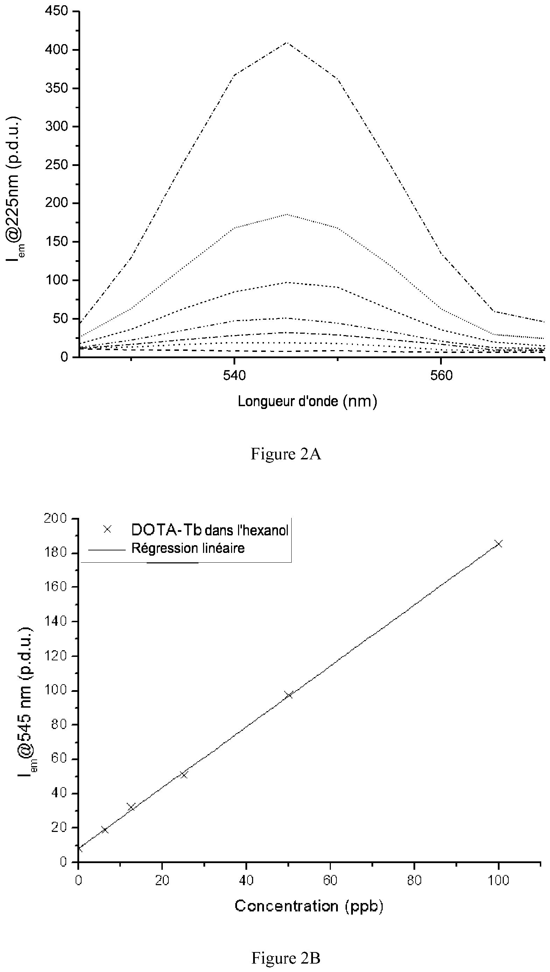

La figure 2A représente les spectres d'émissions en temps résolu (délai 0,2 ms, temps d'acquisition 1 ms, temps de décroissance total 20 ms, accumulation de 1 s par point) sous excitation à 225 nm du marqueur DOTA(Tb) à différentes concentrations dans le *n*-hexanol préparé selon l'exemple 5. Dans un ordre croissant d'intensité à 540 nm, les courbes représentent respectivement : la référence (*n*-hexanol), 6,25, 12,5, 25, 50, 100 et 200 ppb de DOTA(Tb) et la figure 2B représente la corrélation entre la concentration et l'intensité du signal d'émission.

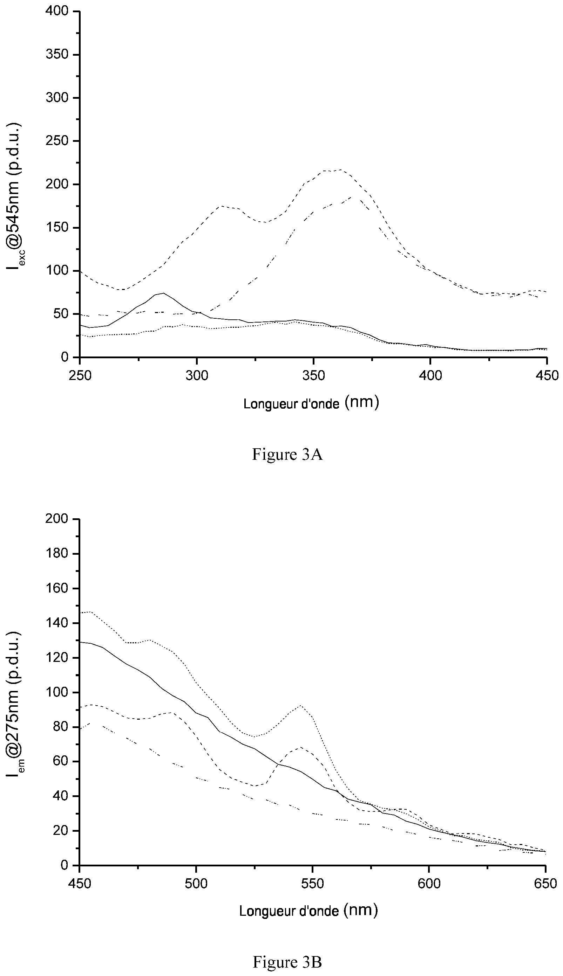

Sur la figure 3A est représenté en trait discontinu (---) le spectre d'excitation en temps résolu (délai 0,1 ms, temps d'acquisition 1 ms, temps de décroissance total 20 ms, accumulation de 0,05 s par point) en considérant la raie d'émission à 545 nm du marqueur PCTA(Tb) à 100 ppb dans le gazole dilué 10 fois dans le *n*-hexanol selon l'exemple 10, et en alternance tiret-point (-·-) la référence associée, correspondant à du *n*-hexanol avec 10% de gazole, analysée dans les mêmes conditions. Sur cette figure, est également représenté en trait plein (-) le spectre d'excitation en temps résolu du marqueur PCTA(Tb) à 100 ppb dans le sans plomb 95 préparé selon l'exemple 11 analysé dans les mêmes conditions, et en pointillé (···) la référence associée, correspondant à du *n*-hexanol avec 10% de sans plomb 95, analysée dans les mêmes conditions. Sur la figure 3B est représenté en pointillé (···) le spectre d'émission en temps résolu (délai 0,1 ms, temps d'acquisition 1 ms, temps de décroissance total 10 ms, accumulation de 0,1 s par point) sous excitation à 275 nm du marqueur PCTA(Tb) à 100 ppb dans le gazole dilué 10 fois dans le *n*-hexanol selon l'exemple 10, et en trait plein (-) la référence associée, correspondant à du *n*-hexanol avec 10% de gazole, analysée dans les mêmes conditions. Sur cette figure, est également représenté en trait discontinu (---) le spectre d'émission en temps résolu du marqueur PCTA(Tb) à 100 ppb dans le sans plomb 95 préparé selon l'exemple 11 analysé dans les mêmes conditions, et en alternance tiret-point (-··-) la référence associée, correspondant à du *n*-hexanol avec 10% de sans plomb 95, analysée dans les mêmes conditions.

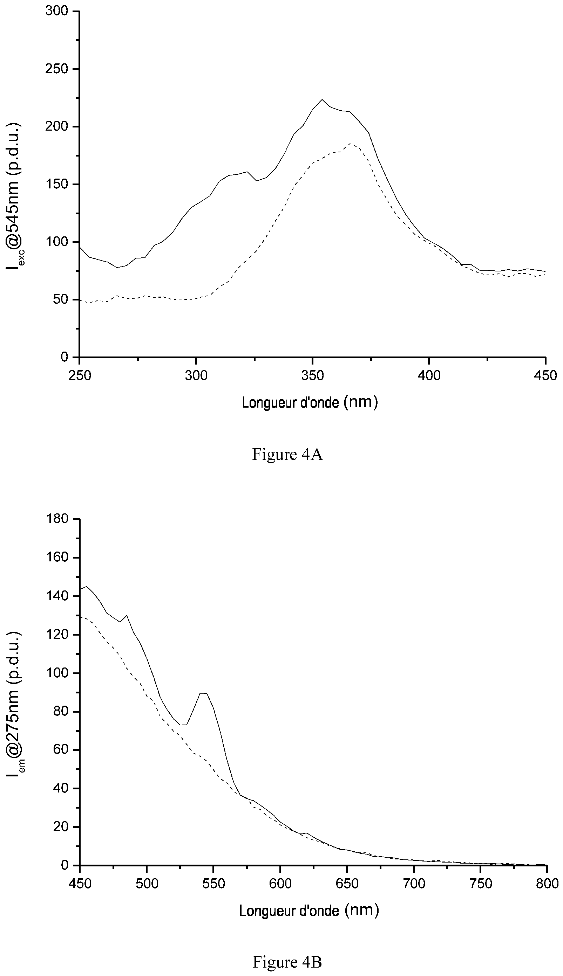

Sur la figure 4A est représenté en trait plein le spectre d'excitation en temps résolu (délai 0,1 ms, temps d'acquisition 1 ms, temps de décroissance total 20 ms, accumulation de 0,05 s par point) en considérant la raie d'émission à 545 nm du marqueur TMPAC(Tb) à 100 ppb dans le gazole dilué 10 fois dans le *n*-hexanol selon l'exemple 12, et en trait discontinu la référence associée, correspondant à du *n*-hexanol avec 10% de gazole, analysée dans les mêmes conditions. Sur la figure 4B est représenté en trait plein le spectre d'émission en temps résolu (délai 0,1 ms, temps d'acquisition 5 ms, temps de décroissance total 10 ms, accumulation de 0,1 s par point) sous excitation à 275 nm du marqueur TMPAC(Tb) à 100 ppb dans le gazole dilué 10 fois dans le *n*-hexanol préparé selon l'exemple 12, et en trait discontinu la référence associée, correspondant à du *n*-hexanol avec 10% de gazole, analysée dans les mêmes conditions.

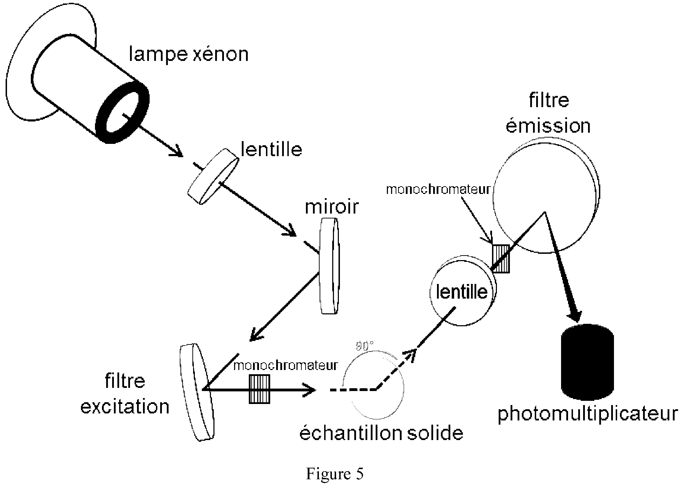

La figure 5 représente un montage possible pour la détection par fluorescence en temps résolu des complexes selon un mode de réalisation particulier de l'invention. Il s'agit d'un montage utilisé pour la détection à l'aide d'un support solide.

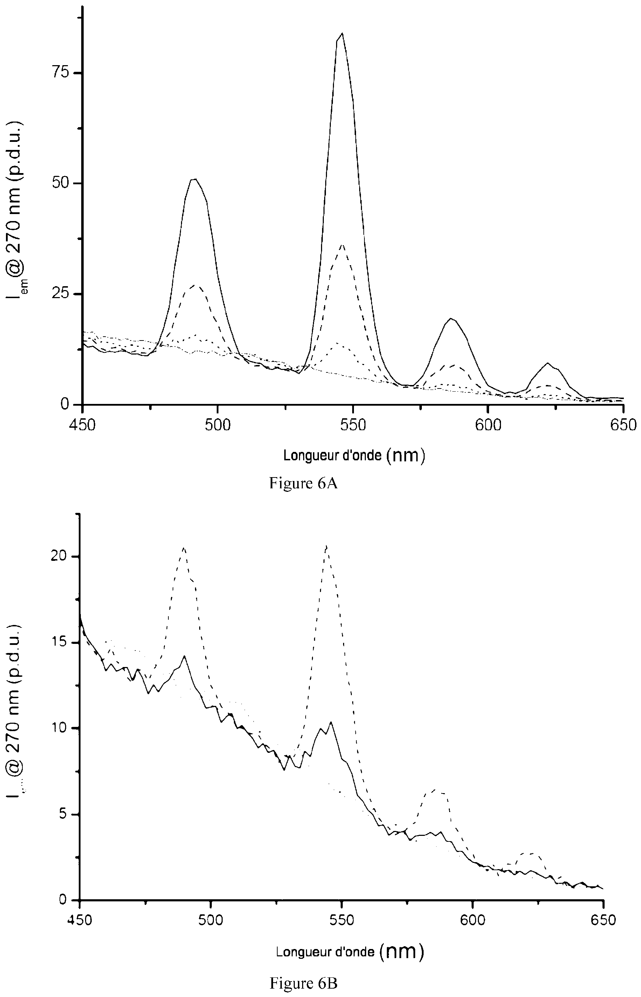

La figure 6A représente les spectres d'émissions en temps résolu (délai 0,1 ms, temps d'acquisition 5 ms, temps de décroissance total 10 ms, accumulation de 0,1 s par point) sous excitation à 270 nm du marqueur PCTA(Tb) à différentes concentrations dans le sans plomb 95 préparé selon l'exemple 13. Dans un ordre croissant d'intensité à 550 nm, les courbes représentent respectivement : la référence (sans plomb 95), 25, 50 et 100 ppb de PCTA(Tb). Sur la figure 6B sont représentés les spectres d'émissions en temps résolu (délai 0,1 ms, temps d'acquisition 5 ms, temps de décroissance total 10 ms, accumulation de 0,1 s par point) sous excitation à 270 nm du marqueur TMPAC(Tb) à différentes concentrations dans le sans plomb 95 préparé selon l'exemple 14. Dans un ordre croissant d'intensité à 550 nm, les courbes représentent respectivement : la référence (sans plomb 95), 25 et 50 ppb de TMPAC(Tb).

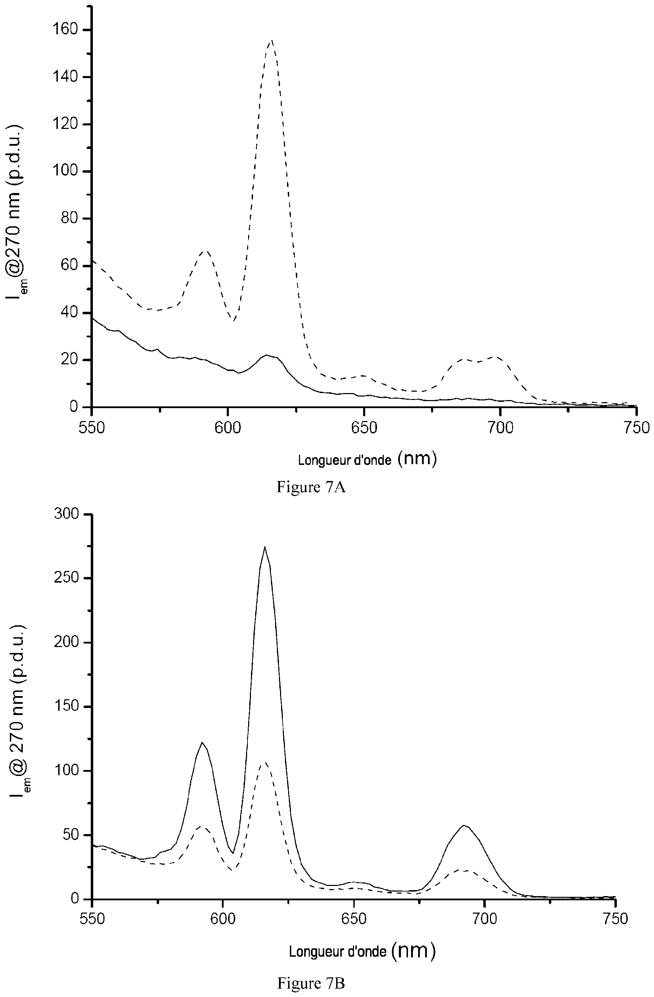

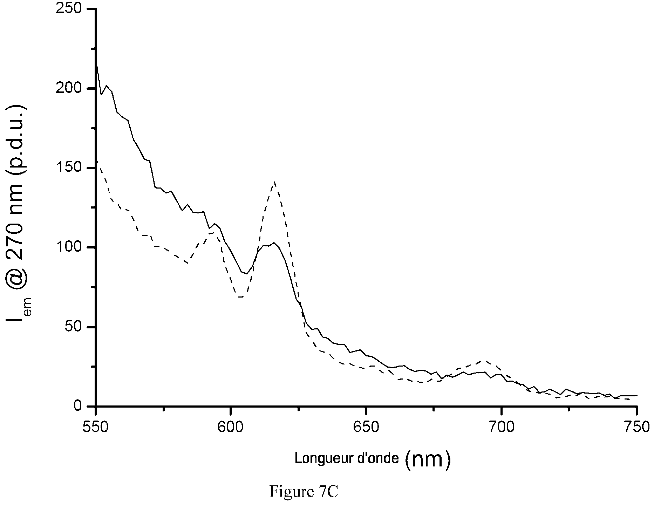

Sur la figure 7A est représenté en trait plein le spectre d'émission en temps résolu (délai 0,1 ms, temps d'acquisition 5 ms, temps de décroissance total 10 ms, accumulation de 0,1 s par point) sous excitation à 270 nm du marqueur PCTA(Eu) à 50 ppb dans le sans plomb 95 et en trait discontinu le même marqueur à 200 ppb dans le sans plomb 95, tous les deux préparés selon l'exemple 15. Sur la figure 7B est représenté en trait plein le spectre d'émission en temps résolu (délai 0,1 ms, temps d'acquisition 5 ms, temps de décroissance total 10 ms, accumulation de 0,1 s par point) sous excitation à 270 nm du marqueur TMPAC(Eu) à 200 ppb dans le sans plomb 95 et en trait discontinu le même marqueur à 50 ppb dans le sans plomb 95, tous les deux préparés selon l'exemple 16. Sur la figure 7C est représenté en trait plein le spectre d'émission en temps résolu (délai 0,1 ms, temps d'acquisition 5 ms, temps de décroissance total 10 ms, accumulation de 0,1 s par point) sous excitation à 270 nm du marqueur TMPAC(Eu) à 5 ppb dans le gazole et en trait discontinu le même marqueur à 20 ppb dans le gazole, tous les deux préparés selon l'exemple 17.

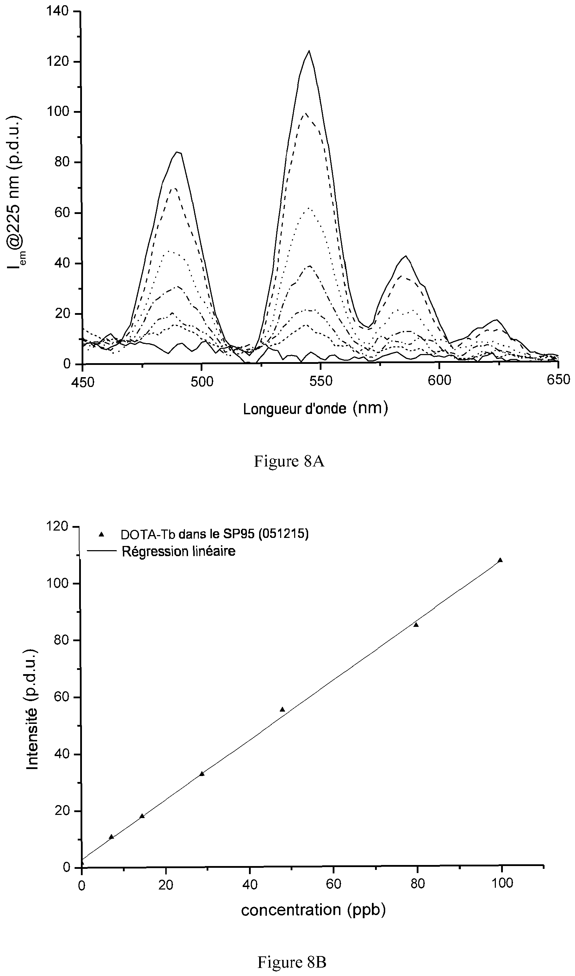

La figure 8A représente les spectres d'émissions en temps résolu (délai 0,5 ms, temps d'acquisition 1 ms, temps de décroissance total 20 ms, accumulation de 0,1 s par point) sous excitation à 225 nm du marqueur DOTA(Tb) à différentes concentrations dans le sans plomb 95 préparé selon l'exemple 18. Dans un ordre croissant d'intensité à 550 nm, les courbes représentent respectivement : la référence (sans plomb 95), 5,76, 11,52, 23,04, 38,40, 64,00 et 80,00 ppb de DOTA(Tb). La figure 8B représente la corrélation entre la concentration et l'intensité du signal d'émission.

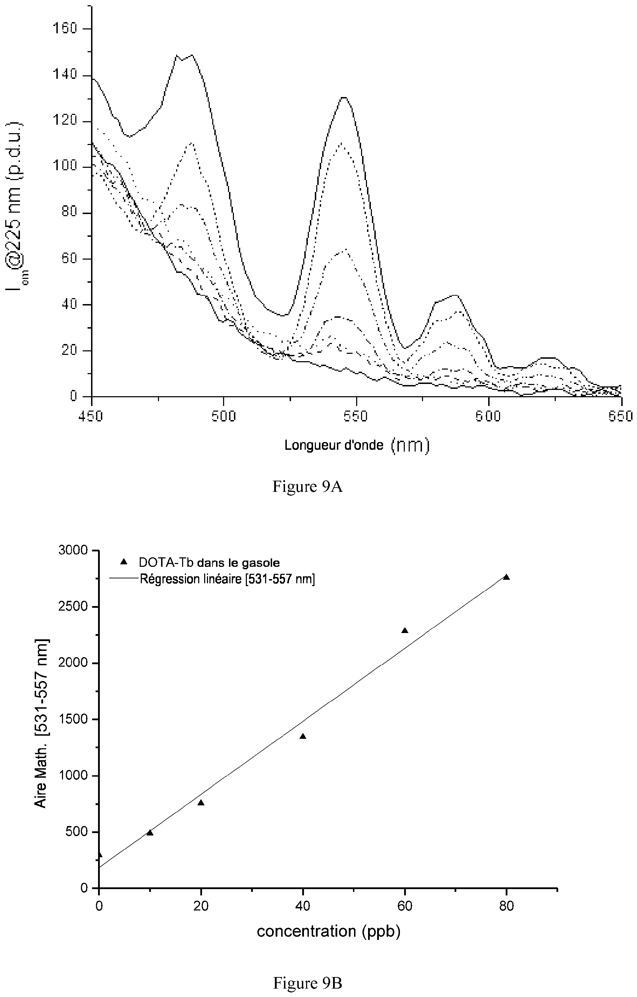

La figure 9A représente les spectres d'émissions en temps résolu (délai 0,5 ms, temps d'acquisition 1 ms, temps de décroissance total 20 ms, accumulation de 0,1 s par point) sous excitation à 225 nm du marqueur DOTA(Tb) à différentes concentrations dans le gazole préparé selon l'exemple 19. Dans un ordre croissant d'intensité à 550 nm, les courbes représentent respectivement : la référence (gazole), 5, 10, 20, 40, 60 et 80 ppb de DOTA(Tb). La figure 9B représente la corrélation entre la concentration et l'aire du signal d'émission entre 531 et 557 nm.

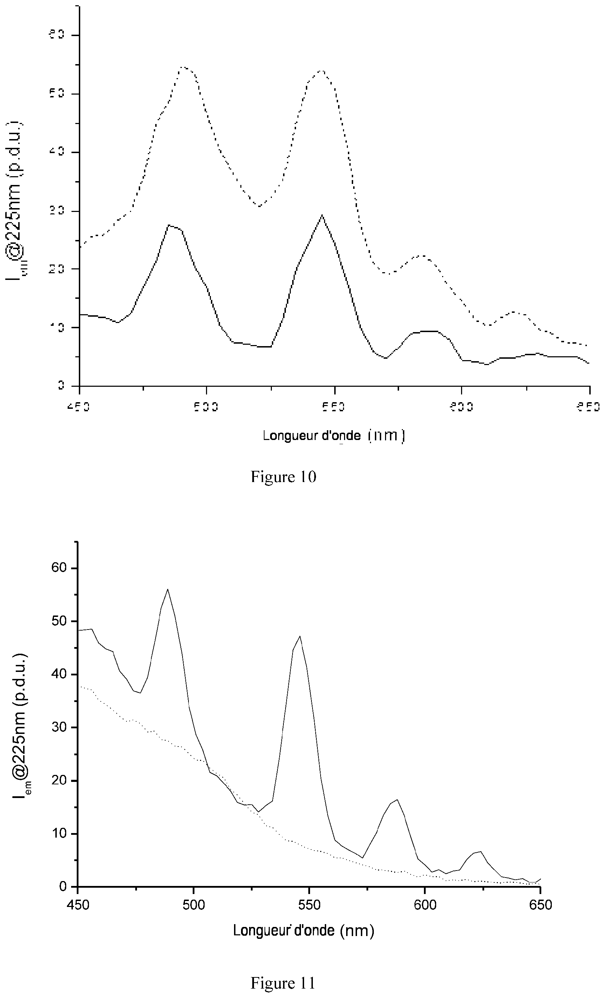

La figure 10 représente le spectre d'émission en temps résolu du marqueur DOTA(Tb) à 0,8 ppb dans du sans plomb 95 préparé selon l'exemple 20. Le trait plein correspond à une analyse avec un délai de 0,5 ms, un temps d'acquisition de 1 ms et un temps de décroissance total de 20 ms avec une accumulation de 1 s par point. Le trait discontinu correspond à une analyse avec un délai de 0,2 ms, un temps d'acquisition de 1 ms et un temps de décroissance total de 20 ms avec une accumulation de 1 s par point.
Sur la figure 11 est représenté en trait plein le spectre d'émission en temps résolu (délai 0,5 ms, temps d'acquisition 1 ms, temps de décroissance total 20 ms, accumulation de 1,5 s par point) sous excitation à 225 nm du marqueur DOTA(Tb) à 160 ppb dans du pétrole brut préparé selon l'exemple 21. Le trait discontinu représente la référence associée, correspondant à du pétrole brut non marqué, analysée dans les mêmes conditions.

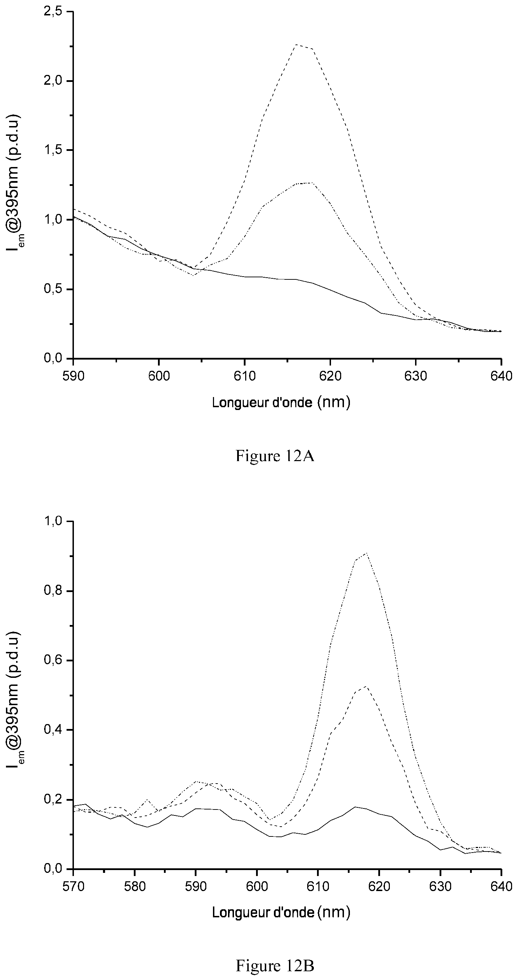

La figure 12A représente le spectre d'émission en temps résolu (délai 0,1 ms, temps d'acquisition 5 ms, temps de décroissance total 10 ms, accumulation de 0,1 s par point) sous excitation à 395 nm du ligand à différentes concentrations dans le gazole préparé selon l'exemple 28. Dans un ordre croissant d'intensité à 620 nm, les courbes représentent respectivement : la référence (gazole), 100 et 200 ppb de ligand. La figure 12B représente le spectre d'émission en temps résolu (délai 0,1 ms, temps d'acquisition 5 ms, temps de décroissance total 10 ms, accumulation de 0,1 s par point) sous excitation à 395 nm du ligand à différentes concentrations dans le sans plomb 95 préparé selon l'exemple 29. Dans un ordre croissant d'intensité à 620 nm, les courbes représentent respectivement : la référence (sans plomb 95), 100 et 200 ppb du ligand.

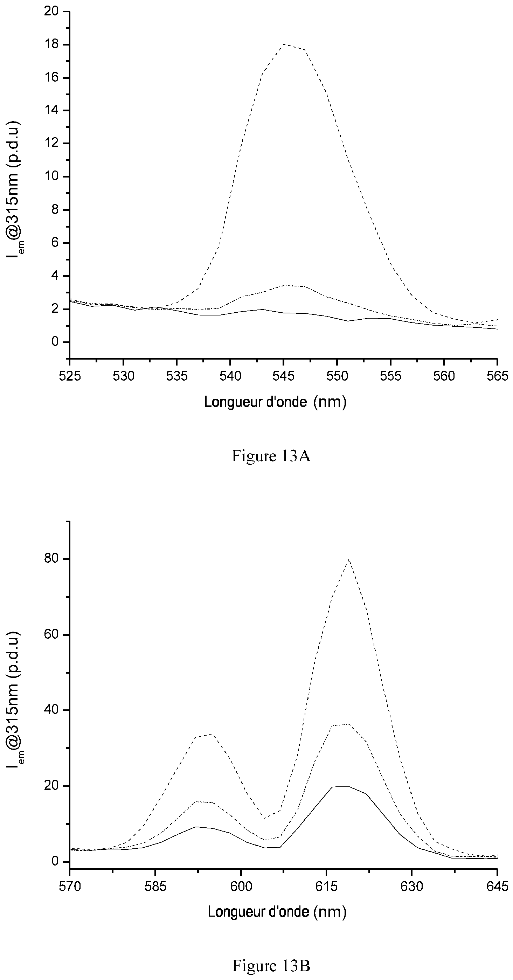

La figure 13 A représente le spectre d'émission en temps résolu (délai 0,1 ms, temps d'acquisition 5 ms, temps de décroissance total 10 ms, accumulation de 0,1 s par point) sous excitation à 315 nm du sel de terbium à différentes concentrations dans du sans plomb 95 préparé selon l'exemple 30. Dans un ordre croissant d'intensité à 545 nm, les courbes représentent respectivement : la référence (sans plomb 95), 10 et 100 ppb de sel de terbium. La figure 13 B représente le spectre d'émission en temps résolu (délai 0,1 ms, temps d'acquisition 5 ms, temps de décroissance total 10 ms, accumulation de 0,1 s par point) sous excitation à 315 nm du sel d'europium à différentes concentrations dans du sans plomb 95 préparé selon l'exemple 31. Dans un ordre croissant d'intensité à 615 nm, les courbes représentent respectivement : 37,5, 50 et 100 ppb de sel d'europium.

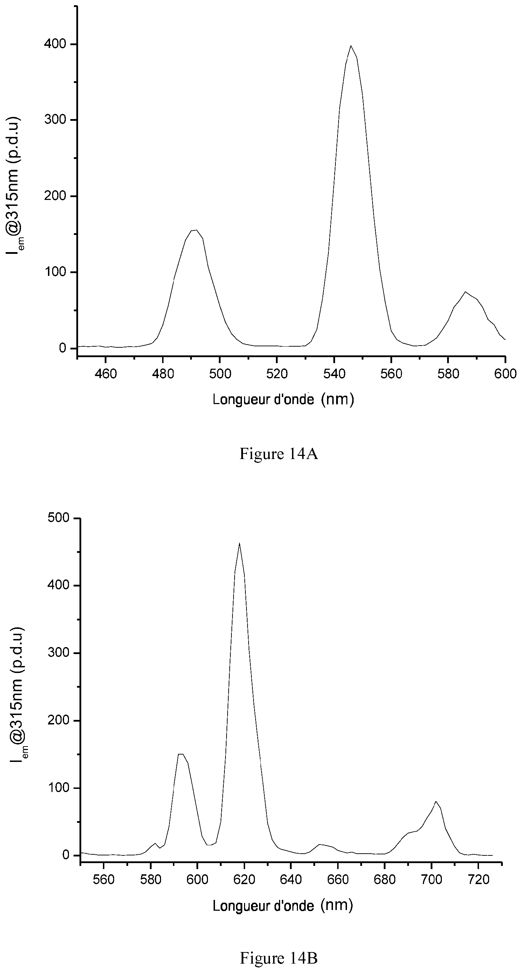

La figure 14 A représente le spectre d'émission en temps résolu (délai 0,1 ms, temps d'acquisition 5 ms, temps de décroissance total 10 ms, accumulation de 0,1 s par point) sous excitation à 315 nm du sel de terbium à 200 ppb dans du pétrole brut préparé selon l'exemple 32 et la figure 14 B représente le spectre d'émission en temps résolu (délai 0,1 ms, temps d'acquisition 5 ms, temps de décroissance total 10 ms, accumulation de 0,1 s par point) sous excitation à 315 nm du sel d'europium à 200 ppb dans du pétrole brut préparé selon l'exemple 33.

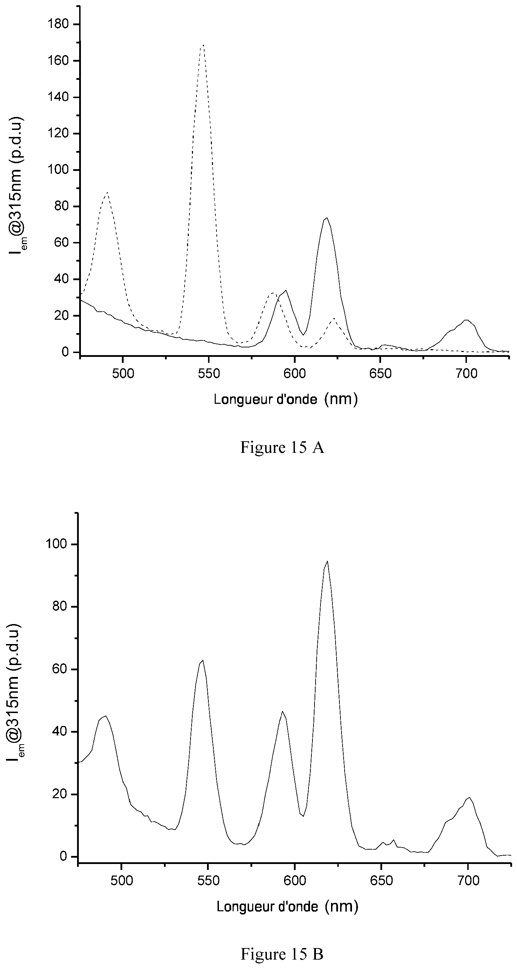

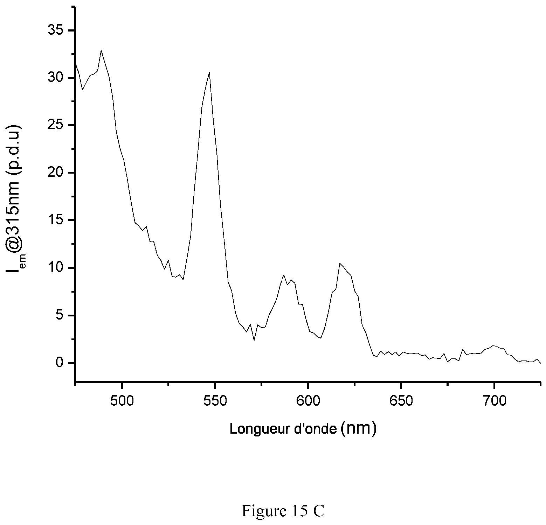

La figure 15 A représente le spectre d'émission en temps résolu (délai 0,1 ms, temps d'acquisition 5 ms, temps de décroissance total 10 ms, accumulation de 0,1 s par point) sous excitation à 315 nm des sels de terbium et d'europium à 100 ppb dans du sans plomb 95 préparés selon les exemples 30 et 31 avec en trait plein le sel d'europium et en trait discontinu le sel de terbium. La figure 15 B et la figure 15C représentent les spectres d'émission en temps résolu (délai 0,1 ms, temps d'acquisition 5 ms, temps de décroissance total 10 ms, accumulation de 0,1 s par point) sous excitation à 315 nm des mélanges de sels dans le sans plomb 95 préparés selon l'exemple 34 avec pour 15B une concentration en sel de terbium et sel d'europium dans le sans plomb 95 de 50 ppb et pour 15C une concentration en sel de terbium de 75 ppb et une concentration en sel d'europium de 25 ppb.

### DESCRIPTION DETAILLEE DE L'INVENTION

L'invention a donc pour objet l'utilisation, comme marqueurs de produits pétroliers, pétroles bruts, biocarburants ou lubrifiants, d'un complexe de terre rare

On désigne par « marqueur » une substance chimique introduite seule ou en combinaison dans un produit, et ayant des propriétés physico-chimiques spécifiques permettant d'authentifier l'origine ou de vérifier l'intégrité produit préalablement marqué par une méthode d'analyse physique ou chimique quantitative, semi-quantitative ou qualitative. Le marqueur doit donc pouvoir être détecté dans le produit marqué pour en assurer la traçabilité.

On désigne par « complexe de terre rare » un édifice polyatomique comprenant au moins les constituants suivants : (i) un cation métallique de terre rare et (ii) un ou plusieurs ligands, ledit cation métallique étant associé auxdits ligands par des liaisons non covalentes pour former le complexe de terre rare.

On désigne par « terres rares » l'ensemble constitué par le scandium, l'yttrium et les lanthanides. De façon préférée, la terre rare du complexe métallique est un métal de la série des lanthanides. Les métaux de la série des lanthanides sont les éléments de numéro atomique allant de 57 (lanthane) à 71 (lutécium). Par exemple, on choisira les lanthanides dans le groupe constitué par : Pr, Nd, Sm, Eu, Gd, Tb, Dy, Ho, Er, Tm et Yb.

Par « ligand », on entend toute molécule capable de former un complexe avec un cation métallique. Un même cation métallique peut être complexé par un ou par plusieurs ligands. Lorsque le complexe métallique comprend plusieurs ligands, ceux-ci peuvent être identiques ou différents.

Préférentiellement, le ligand est choisi de façon à ce que le complexe métallique ait une constante de dissociation Kd inférieure à 1×10⁻⁵ et de préférence inférieure à 1×10⁻¹⁰ correspondant à un pKd supérieur à 5 et de préférence supérieur à 10.

Au sens de l'invention, on entend par « constante de dissociation » la valeur de la constante d'équilibre entre le cation métallique à l'état complexé par l'agent complexant, et le cation métallique et l'agent complexant libres dissociés dans le solvant (Kd). Précisément, le pKd est l'opposé du logarithme de base 10 de la constante de dissociation (-log(Kd)), définie comme la constante d'équilibre de la réaction qui traduit le passage de l'état complexé à l'état ionique.

Le ligand est de préférence un ligand polydenté comprenant au moins 3, de préférence au moins 4, sites de coordination. De préférence, le ligand est choisi parmi les molécules de type polyamine et/ou polyacide carboxylique et leurs dérivés, parmi lesquels on peut citer les esters et les amides. Il s'agit de préférence d'une molécule cyclique.

Selon un mode de réalisation préférée de l'invention, le ligand polydenté comprend un hétérocycle et au moins 3, de préférence 4, sites de coordination dudit ligand polydenté forment, avec d'autres atomes, ledit hétérocycle.

Dans un mode de réalisation plus préféré, le ligand du complexe de terre rare est choisi parmi :
- l'acide 2,2',2",2‴-(1,4,7,10-tétraazacyclododécane-1,4,7,10-tétrayl)tétraacétique (DOTA), de formule (I) 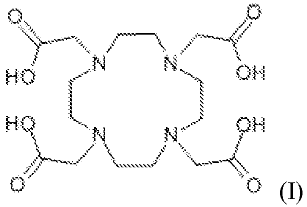 et ses dérivés, parmi lesquels on peut citer le DOTA-GA (acide 2,2',2"-(10-(2,6-dioxotétrahydro-2H-pyran-3-yl)-1,4,7,10-tétraazacyclododécane-1,4,7-triyl)triacetique), le DOTAEt (2,2',2",2‴-(1,4,7,10-tétraazacyclododécane-1,4,7,10-tétrayl)tétraacétate de tétraéthyle), le DOTAM (2,2',2",2‴-(1,4,7,10-Tétraazacyclododécane-1,4,7,10-tétrayl)tetraacétamide) et le DO3A-pyridine de formule (II) ; 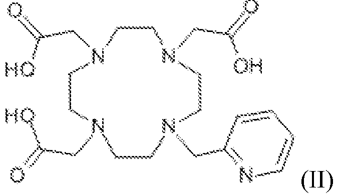
- l'acide 2,2',2"-[3,6,9,15-tétraazabicyclo[9.3.1]pentadéca-1(15),11,13-triène-3,6,9-triyl]triacétique (PCTA), de formule (III) 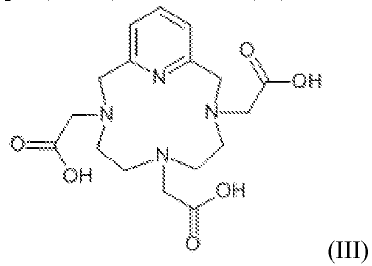 et ses dérivés, parmi lesquels on peut citer les esters et les amides ;
- le tetra-6-(methylene) picolinic acid cyclen (TMPAC) de formule (IV) 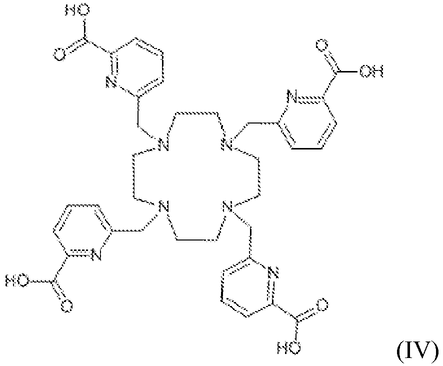 et ses dérivés, parmi lesquels on peut citer les esters et les amides ;
- l'acide 2,2',2"-(1,4,7-triazonane-1,4,7-triyl)triacétique (NOTA), de formule (V), 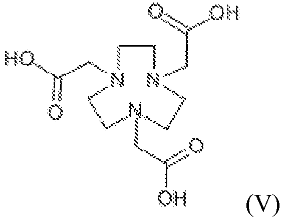 et ses dérivés, parmi lesquels on peut citer les esters et les amides.
- l'acide 1,4,8,11- tétraazacyclotétradécane-1,4,8,11-tétraacétique (TETA ou cyclam) et ses dérivés parmi lesquels on peut citer le tetra-6-(methylene) picolinic acid cyclam (VI)

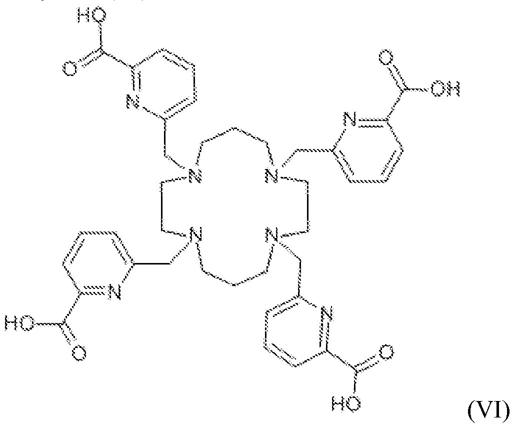

Parmi les autres ligands utilisables selon l'invention, on peut citer les dendrimères, l'éthylène diamine tétra-acétique (EDTA), l'acide nitriloacétique (NTA), l'acide glutamique diacétique (GLDA), les phosphonates, les cyclodextrines et leurs dérivés, le chitosan et les polysaccharides bactériens ou d'algues.

Avantageusement, le complexe de terre rare est détectable par fluorescence en temps résolu. La méthode de détection par fluorescence en temps résolu, c'est-à-dire enclenchée avec retard après excitation (i.e. quelques microsecondes), est par exemple décrite dans l'article « Ultrasensitive Bioanalytical Assays Using Time-Resolved Fluorescence Detection », Pharmac. Ther. Vol. 66, pp. 207-235, 1995. Cette méthode permet d'éliminer une grande partie de la luminescence intrinsèque au produit pétrolier marqué et de ne mesurer que celle relative au marqueur.

Selon un mode de réalisation de l'invention, le ligand comprend un cycle aromatique comprenant au moins un atome d'azote ou de soufre ou plusieurs cycles aromatiques conjugués qui font effet d'antenne, c'est-à-dire qu'ils amplifient le signal fluorescent émis par le marqueur.

Par « produit pétrolier », on entend les dérivés des pétroles bruts issus du raffinage de ceux-ci. Particulièrement, on entend essence, gazole, kérosène, fioul, GPL, bitume, goudron. De préférence, le produit pétrolier est de l'essence, du gazole, du fioul ou du kérosène.

Par « pétroles bruts », on entend des huiles minérales composées d'un mélange non raffiné d'hydrocarbures.

Par « biocarburant », on entend un carburant issu de la biomasse. Les biocarburants peuvent être utilisés seuls ou en mélange avec un carburant d'origine fossile. Parmi les biocarburants on peut citer le biodiesel et le bioéthanol.

Par « lubrifiant », on entend un produit permettant de réduire le frottement de deux éléments en contact et en mouvement l'un par rapport à l'autre. Il s'agit le plus souvent d'huiles, parmi lesquelles on peut citer :
- les huiles minérales, qui incluent tous types d'huiles obtenues par distillation atmosphérique ou sous vide de combustibles fossiles ;
- les huiles végétales, qui incluent tous types d'huiles obtenues par trituration de graines, noyaux ou fruits de végétaux, en particulier les plantes oléagineuses. On peut citer comme exemples les huiles de lin, de colza, de tournesol, de soja, d'olive, de palme, de palmiste, de ricin, de bois, de maïs, de courge, de pépins de raisin, de jojoba, de sésame, de noix, de noisette, d'amande, de karité, d'arachide, de coprah, de bois de chine, de macadamia, de coton, de luzerne, de seigle, de carthame, d'arachide, de coprah, de pin, de courge, de riz, et d'argan. Sont également considérés comme lubrifiant les dérivés de ces huiles, en particulier leurs isomères et/ou des acides et/ou des amides et/ou des esters, plus particulièrement leurs dérivés de transestérification ;
- les huiles animales telles que les huiles de suif et de saindoux ;
- les huiles synthétiques telles que les polyalphaoléfines.

Les complexes de terres rares peuvent également être utilisés en combinaison avec d'autres marqueurs de produits pétroliers, pétroles bruts, biocarburants ou lubrifiants, ou avec d'autres complexes de terres rares tels que défini ci-dessus, ou l'un de ses constituants choisis parmi des ligands ou sels de terre rare et étant aptes à former un complexe de terre rare après ajout d'une solution révélatrice.

L'invention a également pour objet la fourniture d'un produit pétrolier, pétrole brut, biocarburant ou lubrifiant caractérisé en ce qu'il comprend comme marqueur au moins un complexe de terre rare tel que défini ci-dessus.

Selon l'invention, ledit complexe de terre rare, est contenu dans le produit pétrolier, le pétrole brut, le biocarburant ou le lubrifiant, à une concentration inférieure ou égale à 1 ppm, et encore plus préférentiellement inférieure ou égale à 100 ppb, par exemple comprise entre 1 ppb et 1 ppm, et notamment entre 10 ppb et 100 ppb.

Selon un mode de réalisation de l'invention, ledit ligand apte à former un complexe de terre rare contenu dans le produit pétrolier, le pétrole brut, le biocarburant ou le lubrifiant, est choisi parmi DOTA, NOTA, DOTAM, PCTA, TMPAC et leurs dérivés. L'invention porte également sur un pétrole brut, un biocarburant, un lubrifiant ou un produit pétrolier, notamment de l'essence, du fioul, du kérosène ou du gazole, caractérisé en ce qu'il comprend un complexe de terre rare, par exemple un lanthanide complexé avec un ligand, à une concentration inférieure ou égale à 100 ppb, ledit complexe de terre rare étant détectable par fluorescence en temps résolu.

L'invention a également pour objet un procédé de marquage de produits pétroliers, pétroles bruts, biocarburants ou lubrifiants, caractérisé en ce qu'il consiste essentiellement à ajouter à un produit pétrolier, pétrole brut, biocarburant ou lubrifiant un complexe de terre rare ou un sel de terre rare, ledit sel de terre rare étant capable de former un complexe de terre rare, après ajout d'une solution révélatrice comprenant un ligand.

L'invention a également pour objet un procédé de détection d'un complexe de terre rare comme marqueur de produits pétroliers, pétroles bruts, biocarburants ou lubrifiants.

Ce procédé comprend la détection par fluorescence en temps résolu du complexe de terre rare tel que défini ci-dessus, dans un échantillon de produit pétrolier, pétrole brut, biocarburant ou lubrifiant.

Avantageusement, le complexe de terre rare est détecté par fluorescence en temps résolu après extraction de celui-ci dans une solution non miscible, de préférence une solution aqueuse. Dans ce cas, le procédé comprend les étapes suivantes :
a) Mélange d'un échantillon de produit pétrolier, pétrole brut, biocarburant ou lubrifiant comprenant comme marqueur un complexe de terre rare détectable par fluorescence en temps résolu avec une solution non miscible, de préférence une solution aqueuse ;
b) Détection du complexe de terre rare par fluorescence en temps résolu de la solution non miscible.

Le complexe de terre rare peut également être détecté à l'aide d'un support solide tel que papier, bandelette, filtre ou support plan solide. Dans ce cas, le procédé comprend les étapes suivantes :
a) Imprégnation d'un support solide par le produit pétrolier, pétrole brut, biocarburant ou lubrifiant comprenant comme marqueur un complexe de terre rare ;
b) Détection du complexe de terre rare par fluorescence en temps résolu réalisée sur le support solide.

Un exemple de montage utilisé pour l'analyse en fluorescence en temps résolu à l'aide d'un support solide est proposé en figure 5.

Selon un mode de réalisation décrit le marquage peut être fait indirectement. Le produit pétrolier, pétrole brut, biocarburant ou lubrifiant ne contient alors que l'un des constituants du complexe de terre rare, à savoir, le ligand ou l'ion terre rare, et le complexe est formé uniquement au moment de la détection, par ajout d'une solution révélatrice comprenant l'autre constituant, l'ion de terre rare ou ligand, pour former ledit complexe. Par « solution révélatrice », on entend une solution comprenant l'autre constituant en concentration suffisante pour former une quantité de complexe suffisante pour être détectable en fluorescence en temps résolu dans des conditions appropriées. Les deux modes de réalisations suivants font ainsi également partie de l'invention :
Selon un mode de réalisation de l'invention, le procédé comprend les étapes suivantes :
a) Préparation d'un échantillon de produit pétrolier, pétrole brut, biocarburant ou lubrifiant comprenant un ligand, ledit ligand étant capable de former un complexe de terre rare détectable par fluorescence en temps résolu, après ajout d'une solution révélatrice comprenant un sel de terre rare ;
b) Formation du complexe de terre rare par ajout d'une solution révélatrice comprenant un sel de terre rare ;
c) Détection du complexe de terre rare par fluorescence en temps résolu.

Selon un autre mode de réalisation, le procédé comprend les étapes suivantes :
a) Préparation d'un échantillon de produit pétrolier, pétrole brut, biocarburant ou lubrifiant comprenant un sel de terre rare, ledit sel de terre rare étant capable de former un complexe de terre rare détectable par fluorescence en temps résolu, après ajout d'une solution révélatrice comprenant un ligand ;
b) Formation du complexe de terre rare par ajout d'une solution révélatrice comprenant un ligand ;
c) Détection du complexe de terre rare par fluorescence en temps résolu.

Dans les procédés de détection ci-dessus, l'étape de détection du complexe de terre rare par fluorescence en temps résolu peut comprendre les sous-étapes suivantes :
a) émission d'une lumière pulsée sur l'échantillon de produit pétrolier, pétrole brut, biocarburant ou lubrifiant,
b) détection de la lumière émise par l'échantillon après au moins 100 nanosecondes, de préférence au moins 1 microsecondes après la fin du pulse d'excitation,

La détection de certaines longueurs d'ondes spécifiques du complexe de terre rare permettant de déterminer la présence dudit complexe dans l'échantillon.

### EXEMPLES

Les analyses de fluorescence en temps résolu ont été effectuées sur un spectrofluorimètre Varian Cary Eclipse ou sur un spectrofluorimètre Agilent Cary Eclipse.

Sauf mention contraire, les micro-cuvettes utilisées sont des micro-cuvettes en quartz Hellma^{®} fluorescence.

Les ligands ont été achetés chez CheMatech^{®} (Dijon, France) et ont été utilisés tels quels.

Le LH8, qui est un ligand capable de former un complexe de terre rare selon l'invention, a été acheté chez Nano-H (Saint Quentin Fallavier, France) et utilisé tel quel.

Le pétrole brut provient du Moyen Orient.

### 1) Préparation des complexes

Exemple 1 : 20 mg de PCTA (acide 2,2',2"-[3,6,9,15-tétraazabicyclo[9.3.1] pentadéca-1(15),11,13-triène-3,6,9-triyl]triacétique) sont placés dans un flacon de 120 mL. 100 mL de DMSO sont ajoutés dans le flacon qui est ensuite placé sous agitation jusqu'à la dispersion complète du ligand. Une solution à 200 ppm de PCTA est alors obtenue. 40 mg de trichlorure d'europium hexahydraté (EuCl₃.6H₂O) sont pesés dans un flacon de 120 mL. Par la suite, 100 mL de DMSO sont ajoutés dans le flacon qui est placé sous agitation pendant environ 1 h. Une solution à 400 ppm de EuCl₃.6H₂O est alors obtenue dans le flacon.

1 mL de solution de PCTA est introduit dans un flacon de 15 mL en présence de 1 mL de solution EuCl₃.6H₂O. Le mélange est placé sous agitation puis 8 mL de n-hexanol sont ajoutés au mélange. Le système est alors placé à 50 °C sous agitation pendant 12 heures environ. Une solution à 200 ppm de PCTA(Eu) est alors obtenue.

Exemple 2 : Une solution de complexe PCTA(Tb) est préparée selon le mode opératoire décrit dans l'exemple 1 en utilisant du trichlorure de terbium hexahydraté (TbCl₃.6H₂O) à la place de EuCl₃.6H₂O.

Exemple 3 : Une solution de complexe PCTA(Dy) est préparée selon le mode opératoire décrit dans l'exemple 1 en utilisant trichlorure de dysprosium hexahydraté (DyCl₃.6H₂O) à la place de EuCl₃.6H₂O.

Exemple 4 : Une solution de complexe DOTA(Eu) est préparée selon le mode opératoire décrit dans l'exemple 1 en utilisant du DOTA (acide 2,2',2",2"'-(1,4,7,10-tétraazacyclododécane-1,4,7,10-tétrayl)tétraacétique) à la place du PCTA.

Exemple 5 : Une solution de complexe DOTA(Tb) est préparée selon le mode opératoire décrit dans l'exemple 1 en utilisant du DOTA (acide 2,2',2",2"'-(1,4,7,10-tétraazacyclododécane-1,4,7,10-tétrayl)tétraacétique) à la place du PCTA et en utilisant du trichlorure de terbium hexahydraté (TbCl₃.6H₂O) à la place de EuCl₃.6H₂O.

Exemple 6 : Une solution de complexe DOTA(Dy) est préparée selon le mode opératoire décrit dans l'exemple 1 en utilisant du DOTA (acide 2,2',2",2"'-(1,4,7,10-tétraazacyclododécane-1,4,7,10-tétrayl)tétraacétique) à la place du PCTA et en utilisant trichlorure de dysprosium hexahydraté (DyCl₃.6H₂O) à la place de EuCl₃.6H₂O.

Exemple 7 : Une solution de complexe TMPAC(Eu) est préparée selon le mode opératoire décrit dans l'exemple 1 en utilisant du TMPAC (Tetra-6-(methylene)picolinic acid cyclen) à la place du PCTA.

Exemple 8 : Une solution de complexe TMPAC(Tb) est préparée selon le mode opératoire décrit dans l'exemple 1 en utilisant du TMPAC (Tetra-6-(methylene)picolinic acid cyclen) à la place du PCTA et en utilisant du trichlorure de terbium hexahydraté (TbCl₃.6H₂O) à la place de EuCl₃.6H₂O.

Exemple 9 : Une solution de complexe TMPAC(Dy) est préparée selon le mode opératoire décrit dans l'exemple 1 en utilisant du TMPAC (Tetra-6-(methylene)picolinic acid cyclen) à la place du PCTA et en utilisant trichlorure de dysprosium hexahydraté (DyCl₃.6H₂O) à la place de EuCl₃.6H₂O.

Les figures 1A, 1B, 1C et 1D représentent les spectres d'émission en temps résolu des complexes DOTA(Tb), DOTA(Eu), PCTA(Tb) et TMPAC(Tb) dans le *n*-hexanol. Les figures 2A et 2B représentent les spectres d'émission du complexe DOTA(Tb) à différentes concentrations dans le *n*-hexanol et la corrélation entre la concentration et l'intensité d'émission. Ces données montrent qu'il est possible de faire des analyses quantitatives des complexes jusqu'à de très faibles concentrations, en dessous de 100 ppb.

### 2) Détection des complexes dans le sans plomb 95 et le gazole

Les complexes obtenus sont testés comme marqueurs de sans plomb 95 et de gazole.

Exemple 10 : Une solution de PCTA(Tb) obtenue selon l'exemple 2 est diluée dans du gazole pour atteindre une concentration en PCTA(Tb) de 100 ppb. La solution obtenue est alors diluée par 10 dans du *n*-hexanol. Ce mélange est analysé en fluorescence en temps résolu à raison de 500 µl placés dans une cuvette (ref : cuvette semi-micro en PMMA, BRAND^{®}).

Exemple 11 : Une solution de PCTA(Tb) obtenue selon l'exemple 2 est diluée dans du sans plomb 95 pour atteindre une concentration PCTA(Tb) de 100 ppb. La solution obtenue est alors diluée par 10 dans du *n*-hexanol. Ce mélange est analysé en fluorescence en temps résolu à raison de 500 µl placés dans une cuvette (ref : cuvette semi-micro en PMMA, BRAND^{®}).

Exemple 12 : Une solution de TMPAC(Tb) obtenue selon l'exemple 8 est diluée dans du gazole pour atteindre une concentration en TMPAC(Tb) de 100 ppb. La solution obtenue est alors diluée par 10 dans du *n*-hexanol. Ce mélange est analysé en fluorescence en temps résolu à raison de 500 µl placés dans une cuvette (ref : cuvette semi-micro en PMMA, BRAND^{®}).

Les figures 3 (A et B) et 4 (A et B) représentent respectivement les spectres d'excitation et d'émission en temps résolu du complexe PCTA(Tb) dans le sans plomb 95 et le gazole et les spectres d'excitation et d'émission en temps résolu du complexe TMPAC(Tb) dans le gazole. Ces données montrent que le sans plomb 95 et le gazole peuvent être marqués par des complexes de terres rares.

### 3) Détection des complexes dans le sans plomb 95 et le gazole à l'aide d'un support solide

Exemple 13 : Une solution de PCTA(Tb) obtenue selon l'exemple 2 est diluée dans du sans plomb 95 pour atteindre une concentration en PCTA(Tb) de 100 ppb, 50 ppb ou 25 ppb. Après avoir laissé incuber 30 secondes une membrane en nylon (ref : Magna Nylon Membrane Filter 47 mm NY Membrane 0,45 µm) dans une des solutions obtenues, l'analyse de la membrane est effectuée en fluorescence en temps résolu à l'aide d'un porte échantillon solide (ref : Agilent Cary Eclipse solid sample holder). Les mesures sont effectuées avec un échantillon placé à 45° dans le faisceau selon le dispositif représenté en figure 5.

Exemple 14 : Une solution de TMPAC(Tb) obtenue selon l'exemple 8 est diluée dans du sans plomb 95 pour atteindre une concentration en TMPAC(Tb) de 50 ppb ou 25 ppb, puis analysée selon le protocole décrit dans l'exemple 13.

Exemple 15 : Une solution de PCTA(Eu) obtenue selon l'exemple 1 est diluée dans du sans plomb 95 pour atteindre une concentration en PCTA(Eu) de 200 ppb ou 50 ppb, puis le mélange est analysé selon le protocole décrit dans l'exemple 13.

Exemple 16 : Une solution de TMPAC(Eu) obtenue selon l'exemple 7 est diluée dans du sans plomb 95 pour atteindre une concentration en TMPAC(Eu) de 200 ppb ou 50 ppb, puis le mélange est analysé selon le protocole décrit dans l'exemple 13.

Exemple 17 : Une solution de TMPAC(Eu) obtenue selon l'exemple 7 est diluée dans du gazole pour atteindre une concentration en TMPAC(Eu) de 200 ppb ou 50 ppb. La solution est alors diluée par 10 dans de l'isopropanol puis le mélange est analysé selon le protocole décrit dans l'exemple 13.

Les figures 6A et 6B représentent les spectres d'émission en temps résolu des complexes PCTA(Tb) et TMPAC(Tb) dans le sans plomb 95. Les figures 7A et 7B représentent les spectres d'émission en temps résolu des complexes PCTA(Eu) et TMPAC(Eu) dans le sans plomb 95. La figure 7C représente le spectre d'émission en temps résolu du complexe TMPAC(Eu) dans le gazole. Ces données montrent que ces complexes sont détectables dans le sans plomb 95 et le gazole à des quantités inférieures à 100 ppb, jusqu'à 25 ppb pour certains complexes.

### 4) Détection des complexes dans le sans plomb 95 et le gazole par extraction à l'aide d'une solution non miscible

Exemple 18 : Une solution de DOTA(Tb) obtenue selon l'exemple 5 est diluée dans du sans plomb 95 pour atteindre une concentration en DOTA(Tb) de 100 ppb. Cette solution est ensuite diluée dans du sans plomb 95 pour atteindre la concentration en DOTA(Tb) désirée et 25 mL sont placés en présence de 5 mL d'eau ultra pure dans un flacon adapté. Le tout est agité vigoureusement pendant 30 secondes. Le flacon est alors ouvert afin de permettre la séparation des deux phases. Après 10 minutes environ, 500 µl de la phase aqueuse sont prélevés puis analysés en fluorescence en temps résolu dans une micro-cuvette. Entre chaque analyse, la micro-cuvette est préalablement lavée avec de l'acide chlorhydrique (12 M) puis abondamment rincée à l'eau et enfin à l'éthanol.

Exemple 19 : Une solution de DOTA(Tb) obtenue selon l'exemple 5 est diluée dans du gazole pour atteindre une concentration en DOTA(Tb) de 100 ppb. Cette solution est ensuite diluée dans du gazole pour atteindre la concentration en DOTA(Tb) désirée et 25 mL sont placés en présence de 5 mL d'eau ultra pure dans un flacon adapté. Le tout est agité vigoureusement pendant 30 secondes. Le flacon est alors ouvert afin de permettre la séparation des deux phases. Après 10 minutes environ, 500 µl de la phase aqueuse sont prélevés puis analysés en fluorescence en temps résolu dans une micro-cuvette. Entre chaque analyse, la micro-cuvette est préalablement lavée avec de l'acide chlorhydrique (12 M) puis abondamment rincée à l'eau et enfin à l'éthanol.

Exemple 20 : Une solution de DOTA(Tb) obtenue selon l'exemple 5 est diluée dans du sans plomb 95 pour atteindre une concentration en DOTA(Tb) de 80 ppb. Cette solution est ensuite diluée dans du sans plomb 95 pour atteindre une concentration en DOTA(Tb) de 0,8 ppb et 100 mL sont placés en présence de 10 mL d'eau ultra pure dans un ballon monocol de 250 mL. Le mélange est agité vigoureusement. Ensuite, environ 95 mL du mélange sont évaporés. 5 mL d'eau sont alors ajoutés et le mélange est agité. Après 5 minutes de repos, 500 µl de la phase aqueuse sont prélevés puis analysés en fluorescence en temps résolu dans une micro-cuvette.

Les figures 8 (A et B) et 9 (A et B) représentent les spectres d'émission en temps résolu du complexe DOTA(Tb) à différentes concentrations dans le sans plomb 95 et le gazole et la corrélation entre la concentration et l'intensité d'émission. Ces données montrent qu'il est possible de faire des analyses quantitatives de complexes de terres rares dans ces carburants jusqu'à de très faibles concentrations.

La figure 10 représente le spectre d'émission en temps résolu du complexe DOTA(Tb) à 0,8 ppb dans le sans plomb 95. Ces données montrent que la détection des complexes de terres rares comme marqueurs peut être effectuée à des concentrations inférieures à 1 ppb.

### 5) Détection des complexes dans du pétrole brut.

Exemple 21 : Une solution de DOTA(Tb) obtenue selon l'exemple 5 est diluée dans du n-hexanol pour atteindre une concentration en DOTA(Tb) de 10 ppm. 100 mL de pétrole brut sont ensuite marqués à 160 ppb en utilisant cette solution. Après avoir ajouté 10 mL d'eau au pétrole brut marqué, le mélange est agité pendant au moins 1 heure. Le tout est placé dans une ampoule à décanter de 250 mL. 100 mL de cyclohexane sont alors ajoutés. Après avoir fermé l'ampoule, elle est agitée en prenant garde de dégazer le système sous pression. L'ampoule est alors laissée au repos après ouverture. Une fois les phases séparées, la phase aqueuse est prélevée puis analysée en fluorescence en temps résolu dans une micro-cuvette.

La figure 11 représente le spectre d'émission du complexe DOTA(Tb) dans du pétrole brut. Ces données montrent qu'il est également possible d'utiliser les complexes de terres rares comme marqueurs de pétroles bruts.

### 6) Marquage indirect

### Exemples 22 : Préparation d'une solution révélatrice d'europium

100 mg de chlorure d'europium hexahydraté (EuCl₃.6H₂O) sont pesés dans un flacon de 100 mL et 100 mL d'eau sont ajoutés. 2,5 mL de la solution obtenue sont alors introduits dans un flacon de 50 mL et 47,5 mL de *n*-hexanol sont ajoutés.

### Exemple 23 : Préparation d'une solution révélatrice de LH8 en milieu organique (5% H₂O)

10 mg de LH8 sont pesés dans un flacon de 100 mL et 100 mL d'eau ultra-pure sont ajoutés. Le mélange est placé sous agitation pendant environ 10 minutes. 2,5 mL de la solution obtenue sont introduits dans un flacon de 60 mL contenant 47,5 mL de *n-*hexanol sous agitation.

### Exemple 24 : Préparation d'une solution révélatrice de LH8 en milieu aqueux

10 mg de LH8 sont pesés dans un flacon de 100 mL et 100 mL d'eau ultra-pure sont ajoutés. Le mélange est placé sous agitation pendant environ 10 minutes. 2,5 mL de la solution obtenue sont introduits dans un flacon de 60 mL. 47,5 mL d'eau ultra-pure sont ensuite ajoutés et le système est placé sous agitation.

### Exemple 25 : Préparation d'une solution de ligand (marqueur)

20 mg de 1,3-di-pyridin-3-yl-propane-1,3-dione sont pesés dans un flacon de 100 mL et 100 mL de *n*-hexanol sont ensuite ajoutés. Une solution à 200 ppm est alors obtenue.

### Exemple 26 : Préparation d'une solution d'europium (marqueur)

10 mL de solution de chlorure d'europium préparée selon l'exemple 1 et 90 mL de *n-*hexanol sont introduits dans un flacon de 100 mL et le système est placé sous agitation. Une solution à 40 ppm est alors obtenue.

### Exemple 27 : Préparation d'une solution de terbium (marqueur)

10 mL de solution de chlorure de terbium préparée selon l'exemple 2 et 90 mL de *n-*hexanol sont introduits dans un flacon de 100 mL et le système est placé sous agitation. Une solution à 40 ppm est alors obtenue.

Exemple 28 : 250 µL de solution de ligand préparée selon l'exemple 25 sont introduits dans un flacon de 10 mL et 9,75 mL de gazole sont ensuite ajoutés. Cette solution à 5 ppm de ligand est alors diluée dans du gazole à la concentration souhaitée. 1mL de la solution obtenue est placé en présence de 1 mL de solution révélatrice d'europium, préparée selon l'exemple 22, dans une cuvette (ref : cuvette Sarstedt^{®} en PMMA 2,5-4,5 mL). 100 µL d'eau ultra-pure sont ensuite ajoutés dans la cuvette. Après 10 minutes environ, le contenu de la cuvette est analysé en fluorescence en temps résolu.

Exemple 29 : 250 µL de la solution de ligand préparée selon l'exemple 25 sont introduits dans un flacon de 10 mL et 9,75 mL de sans plomb 95 sont ensuite ajoutés. Cette solution à 5 ppm de ligand est alors diluée dans du sans plomb 95 à la concentration souhaitée. 1mL de la solution obtenue est placé en présence de 1 mL de solution révélatrice d'europium, préparée selon l'exemple 22, dans une cuvette (ref : cuvette Sarstedt^{®} en PMMA 2,5-4,5 mL). 100 µL d'eau ultra-pure sont ensuite ajoutés dans la cuvette. Après 10 minutes environ, le contenu de la cuvette est analysé en fluorescence en temps résolu.

Les figures 12A et 12B représentent les spectres d'émission en temps résolu du complexe de terre rare après ajout d'une solution révélatrice à une solution de ligand dans du gazole et dans de l'essence sans plomb 95. Ces données montrent qu'il est possible de faire du marquage indirect an ajoutant uniquement le ligand au produit pétrolier.

Exemple 30 : 250 µL de la solution de chlorure de terbium préparée selon l'exemple 27 sont introduits dans un flacon de 60 mL avec 49,75 mL d'essence sans plomb 95. Le système est ensuite placé sous agitation. Cette solution à 200 ppb de sel de terre rare est alors diluée dans du sans plomb 95 à la concentration souhaitée. 200 µL de la solution obtenue sont placés en présence de 1,8 mL de solution révélatrice, préparée selon l'exemple 23, dans une cuvette (ref : cuvette en PMMA Sarstedt^{®} 2,5-4,5 mL). Après 10 minutes environ, le contenu de la cuvette est analysé en fluorescence en temps résolu.

Exemple 31 : 250 µL de la solution de chlorure d'europium préparée selon l'exemple 26 sont introduits dans un flacon de 60 mL avec 49,75 mL de sans plomb 95. Le système est ensuite placé sous agitation. Cette solution à 200 ppb de sel de terre rare est alors diluée dans du sans plomb 95 à la concentration souhaitée. 200 µL de la solution obtenue sont placés en présence de 1,8 mL de solution révélatrice préparée selon l'exemple 23 dans une cuvette (ref : cuvette en PMMA Sarstedt^{®} 2,5-4,5 mL). Après 10 minutes environ, le contenu de la cuvette est analysé en fluorescence en temps résolu.

Les figures 13A et 13B représentent les spectres d'émission en temps résolu du complexe après ajout d'une solution révélatrice à une solution de sel de terre rare dans de l'essence sans plomb 95. Ces données montrent qu'il est possible de faire du marquage indirect an ajoutant uniquement le sel de terre rare au produit pétrolier.

Exemple 32 : 250 µL de la solution de chlorure de terbium préparée dans l'exemple 27 sont introduits dans un flacon de 60 mL avec 49,75 mL de pétrole brut. Le système est ensuite placé sous agitation. 2 mL de la solution à 200 ppb de sel de terre rare obtenue sont placés dans un tube pour centrifugeuse de 50 mL et 18 mL de solution révélatrice préparée selon l'exemple 24 sont ensuite ajoutés. L'échantillon est agité vigoureusement pendant 30 secondes puis centrifugé à 1500 rpm pendant 5 minutes. 3 mL de phase aqueuse sont prélevés puis placés dans une cuvette (ref : cuvette en PMMA Sarstedt^{®} 2,5-4,5 mL). Le contenu de la cuvette est ensuite analysé en fluorescence en temps résolu.

Exemple 33 : 250 µL de la solution de chlorure d'europium préparée dans l'exemple 26 sont introduits dans un flacon de 60 mL avec 49,75 mL de pétrole brut. Le système est ensuite placé sous agitation. 2 mL de la solution à 200 ppb de sel de terre rare obtenue sont placés dans un tube pour centrifugeuse de 50 mL et 18 mL de solution révélatrice préparée selon l'exemple 24 sont ensuite ajoutés. L'échantillon ainsi préparé est agité vigoureusement pendant 30 secondes puis centrifugé à 1500 rpm pendant 5 minutes. 3 mL de phase aqueuse sont prélevés puis placés dans une cuvette (ref : cuvette en PMMA Sarstedt^{®} 2,5-4,5 mL). Le contenu de la cuvette est ensuite analysé en fluorescence en temps résolu.

Les figures 14A et 14B représentent les spectres d'émission en temps résolu des complexes d'europium et de terbium après ajout d'une solution révélatrice au pétrole brut comprenant un sel de terre rare. Ces données montrent qu'il est également possible de faire du marquage indirect dans du pétrole brut.

Exemple 34 : Des solutions de sans plomb 95 comprenant à la fois du sel de terbium et du sel d'europium sont préparées. Les différentes concentrations sont obtenues après dilutions successives à partir des solutions mères d'essence sans plomb 95 marquées à 200 ppb en sel de terbium ou d'europium (respectivement les exemples 27 et 26). 200 µL de la solution obtenue sont placés en présence de 1,8 mL de solution révélatrice, préparée selon l'exemple 23, dans une cuvette (ref : cuvette en PMMA Sarstedt^{®} 2,5-4,5 mL). Le contenu de la cuvette est ensuite analysé en fluorescence en temps résolu.

Les figures 15A, 15B et 15C représentent les spectres d'émission en temps résolu des complexes d'europium et de terbium après ajout d'une solution révélatrice dans l'essence sans plomb 95 comprenant une combinaison de sels de terres rares. Ces données montrent qu'il est possible de cumuler plusieurs marqueurs.

## Revendications

1. Utilisation comme marqueurs de produits pétroliers, pétroles bruts, biocarburants ou lubrifiants, d'un complexe de terre rare.

2. Utilisation selon la revendication 1 **caractérisée en ce que** la terre rare est choisie parmi les lanthanides, de préférence parmi Pr, Nd, Sm, Eu, Gd, Tb, Dy, Ho, Er, Tm et Yb.

3. Utilisation selon l'une des revendications 1 ou 2 **caractérisée en ce que** ledit complexe de terre rare comprend au moins un ligand polydenté comprenant au moins 3, de préférence au moins 4, sites de coordination.

4. Utilisation selon la revendication 3 **caractérisée en ce que** le ligand polydenté comprend un hétérocycle et qu'au moins 3, de préférence 4, sites de coordination dudit ligand polydenté forment, avec d'autres atomes, ledit hétérocycle.

5. Utilisation selon l'une quelconque des revendications précédentes **caractérisée en ce que** le complexe de terre rare comprend un ligand choisi parmi les molécules de type polyamine et/ou polyacide carboxylique, de préférence, le ligand est choisi parmi DOTA, NOTA, DOTAM, PCTA, TMPAC et leurs dérivés.

6. Utilisation selon l'une quelconque des revendications précédentes **caractérisée en ce que** le complexe de terre rare est détectable par fluorescence en temps résolu.

7. Utilisation selon l'une quelconque des revendications précédentes **caractérisée en ce que** le complexe de terre rare comprend un ligand, ledit ligand comprend au moins un cycle aromatique contenant au moins un atome d'azote ou de soufre ou des cycles aromatiques conjugués, pour faire effet d'antenne.

8. Utilisation selon l'une quelconque des revendications précédentes **caractérisée en ce que** le produit pétrolier est de l'essence, du fioul, du kérosène ou du gazole.

9. Produit pétrolier, pétrole brut, biocarburant ou lubrifiant **caractérisé en ce qu'**il comprend comme marqueur au moins un complexe de terre rare tel que défini dans les revendications précédentes, et **en ce que** ledit complexe de terre rare est contenu dans le produit pétrolier, biocarburant ou lubrifiant à une concentration inférieure ou égale à 1 ppm, de préférence inférieure ou égale à 100 ppb, par exemple comprise entre 1 ppb et 1 ppm, et notamment entre 10 ppb et 100 ppb.

10. Procédé de marquage de produits pétroliers, pétroles bruts, biocarburants ou lubrifiants, **caractérisé en ce qu'**il consiste essentiellement à ajouter à un produit pétrolier, pétrole brut, biocarburant ou lubrifiant un complexe de terre rare ou un sel de terre rare, ledit sel de terre rare étant capable de former un complexe de terre rare, après ajout d'une solution révélatrice comprenant un ligand.

11. Procédé de détection d'un complexe de terre rare comme marqueur de produits pétroliers, pétroles bruts, biocarburants ou lubrifiants, **caractérisé en ce qu'**il comprend la détection par fluorescence en temps résolu du complexe de terre rare dans un échantillon de produit pétrolier, pétrole brut, biocarburant ou lubrifiant.

12. Procédé selon la revendication 11 **caractérisé en ce qu'**il comprend les étapes suivantes :
a) Préparation d'un échantillon de produit pétrolier, pétrole brut, biocarburant ou lubrifiant comprenant un ligand, ledit ligand étant capable de former un complexe de terre rare détectable par fluorescence en temps résolu, après ajout d'une solution révélatrice comprenant un sel de terre rare ;
b) Formation du complexe de terre rare par ajout d'une solution révélatrice comprenant un sel de terre rare ;
c) Détection du complexe de terre rare par fluorescence en temps résolu.

13. Procédé selon la revendication 11 **caractérisé en ce qu'**il comprend les étapes suivantes :
a) Préparation d'un échantillon de produit pétrolier, pétrole brut, biocarburant ou lubrifiant comprenant un sel de terre rare, ledit sel de terre rare étant capable de former un complexe de terre rare détectable par fluorescence en temps résolu, après ajout d'une solution révélatrice comprenant un ligand ;
b) Formation du complexe de terre rare par ajout d'une solution révélatrice comprenant un ligand ;
c) Détection du complexe de terre rare par fluorescence en temps résolu.

14. Procédé selon la revendication 11 **caractérisé en ce qu'**il comprend les étapes suivantes :
a) Mélange d'un échantillon de produit pétrolier, pétrole brut, biocarburant ou lubrifiant comprenant comme marqueur un complexe de terre rare détectable par fluorescence en temps résolu avec une solution non miscible, de préférence une solution aqueuse ;
b) Détection du complexe de terre rare par fluorescence en temps résolu de la solution non miscible.

15. Procédé selon la revendication 11 **caractérisé en ce qu'**il comprend les étapes suivantes :
a) Imprégnation d'un support solide par le produit pétrolier, pétrole brut, biocarburant ou lubrifiant comprenant comme marqueur un complexe de terre rare ;
b) Détection du complexe de terre rare par fluorescence en temps résolu réalisée sur le support solide.

## Patentansprüche

1. Verwendung eines Seltene-Erden-Komplexes als Marker für Erdölprodukte, Rohöle, Biokraftstoffe oder Schmiermittel.

2. Verwendung nach Anspruch 1, **dadurch gekennzeichnet, dass** die Seltene Erde aus den Lanthaniden gewählt ist, bevorzugt aus Pr, Nd, Sm, Eu, Gd, Tb, Dy, Ho, Er, Tm und Yb.

3. Verwendung nach einem der Ansprüche 1 oder 2, **dadurch gekennzeichnet, dass** der Seltene-Erden-Komplex wenigstens einen mehrzähnigen Liganden umfasst, der wenigstens 3, bevorzugt wenigstens 4, Koordinationsstellen umfasst.

4. Verwendung nach Anspruch 3, **dadurch gekennzeichnet, dass** der mehrzähnige Ligand einen Heterocyclus umfasst und wenigstens 3, bevorzugt 4, Koordinationsstellen des mehrzähnigen Liganden zusammen mit anderen Atomen den Heterocyclus bilden.

5. Verwendung nach einem der vorhergehenden Ansprüche, **dadurch gekennzeichnet, dass** der Seltene-Erden-Komplex einen Liganden umfasst, der aus Molekülen vom Typ Polyamin und/oder Polycarbonsäure gewählt ist, wobei der Ligand bevorzugt aus DOTA, NOTA, DOTAM, PCTA, TMPAC und deren Derivaten gewählt ist.

6. Verwendung nach einem der vorhergehenden Ansprüche, **dadurch gekennzeichnet, dass** der Seltene-Erden-Komplex durch zeitaufgelöste Fluoreszenz nachweisbar ist.

7. Verwendung nach einem der vorhergehenden Ansprüche, **dadurch gekennzeichnet, dass** der Seltene-Erden-Komplex einen Liganden umfasst, wobei der Ligand wenigstens einen aromatischen Ring mit wenigstens einem Stickstoff- oder Schwefelatom oder konjugierte aromatische Ringe umfasst, um eine Antennenwirkung zu erzielen.

8. Verwendung nach einem der vorhergehenden Ansprüche, **dadurch gekennzeichnet, dass** das Erdölprodukt Benzin, Heizöl, Kerosin oder Dieselkraftstoff ist.

9. Erdölprodukt, Rohöl, Biokraftstoff oder Schmiermittel, **dadurch gekennzeichnet, dass** es als Marker wenigstens einen Seltene-Erden-Komplex wie in den vorhergehenden Ansprüchen definiert umfasst und dass der Seltene-Erden-Komplex in dem Erdölprodukt, Biokraftstoff oder Schmiermittel in einer Konzentration von weniger als oder gleich 1 ppm, bevorzugt weniger als oder gleich 100 ppb, beispielsweise zwischen 1 ppb und 1 ppm, und insbesondere zwischen 10 ppb und 100 ppb enthalten ist.

10. Verfahren zur Markierung von Erdölprodukten, Rohölen, Biokraftstoffen oder Schmiermitteln, **dadurch gekennzeichnet, dass** es im Wesentlichen darin besteht, einem Erdölprodukt, Rohöl, Biokraftstoff oder Schmiermittel einen Seltene-Erden-Komplex oder ein Seltene-Erden-Salz zuzusetzen, wobei das Seltene-Erden-Salz nach Zugabe einer Entwicklerlösung, die einen Liganden umfasst, einen Seltene-Erden-Komplex bilden kann.

11. Verfahren zum Nachweis eines Seltene-Erden-Komplexes als Marker für Erdölprodukte, Rohöle, Biokraftstoffe oder Schmiermittel, **dadurch gekennzeichnet, dass** es den zeitaufgelösten Fluoreszenznachweis des Seltene-Erden-Komplexes in einer Probe eines Erdölprodukts, Rohöls, Biokraftstoffs oder Schmiermittels umfasst.

12. Verfahren nach Anspruch 11, **dadurch gekennzeichnet, dass** es die folgenden Schritte umfasst:
a) Herstellung einer Probe eines Erdölprodukts, Rohöls, Biokraftstoffs oder Schmiermittels, die einen Liganden umfasst, wobei der Ligand nach Zugabe einer Entwicklerlösung, die ein Seltene-Erden-Salz umfasst, einen Seltene-Erden-Komplex bilden kann, der durch zeitaufgelöste Fluoreszenz nachweisbar ist;
b) Bildung des Seltene-Erden-Komplexes durch Zugabe einer Entwicklerlösung, die ein Seltene-Erden-Salz umfasst;
c) Nachweis des Seltene-Erden-Komplexes durch zeitaufgelöste Fluoreszenz.

13. Verfahren nach Anspruch 11, **dadurch gekennzeichnet, dass** es die folgenden Schritte umfasst:
a) Herstellung einer Probe eines Erdölprodukts, Rohöls, Biokraftstoffs oder Schmiermittels, das ein Seltene-Erden-Salz umfasst, wobei das Seltene-Erden-Salz nach Zugabe einer Entwicklerlösung, die einen Liganden umfasst, einen Seltene-Erden-Komplex bilden kann, der durch zeitaufgelöste Fluoreszenz nachweisbar ist;
b) Bildung des Seltene-Erden-Komplexes durch Zugabe einer Entwicklerlösung, die einen Liganden umfasst;
c) Nachweis des Seltene-Erden-Komplexes durch zeitaufgelöste Fluoreszenz.

14. Verfahren nach Anspruch 11, **dadurch gekennzeichnet, dass** es die folgenden Schritte umfasst:
a) Mischen einer Probe eines Erdölprodukts, Rohöls, Biokraftstoffs oder Schmiermittels, das als Markierung einen Seltene-Erden-Komplex umfasst, der durch zeitaufgelöste Fluoreszenz nachweisbar ist, mit einer nicht mischbaren Lösung, bevorzugt einer wässrigen Lösung;
b) Nachweis des Seltene-Erden-Komplexes durch zeitaufgelöste Fluoreszenz der nicht mischbaren Lösung.

15. Verfahren nach Anspruch 11, **dadurch gekennzeichnet, dass** es die folgenden Schritte umfasst:
a) Imprägnierung eines festen Trägers mit dem Erdölprodukt, Rohöl, Biokraftstoff oder Schmiermittel, das als Markierung einen Seltene-Erden-Komplex umfasst;
b) Nachweis des Seltene-Erden-Komplexes durch zeitaufgelöste Fluoreszenz, die auf dem festen Träger durchgeführt wird.

## Claims

1. The use, as markers of petroleum products, crude oils, biofuels or lubricants, of a rare earth complex.

2. The use as claimed in claim 1, **characterized in that** the rare earth is selected from the lanthanides, preferably from Pr, Nd, Sm, Eu, Gd, Tb, Dy, Ho, Er, Tm and Yb.

3. The use as claimed in one of claims 1 or 2, **characterized in that** said rare earth complex comprises at least one multidentate ligand comprising at least 3, preferably at least 4, coordination sites.

4. The use as claimed in claim 3, **characterized in that** the multidentate ligand comprises a heterocycle and **in that** at least 3, preferably 4, coordination sites of said multidentate ligand form, with other atoms, said heterocycle.

5. The use as claimed in any one of the preceding claims, **characterized in that** the rare earth complex comprises a ligand selected from molecules of the polyamine and/or polycarboxylic acid type, and preferably the ligand is selected from DOTA, NOTA, DOTAM, PCTA, TMPAC and derivatives thereof.

6. The use as claimed in any one of the preceding claims, **characterized in that** the rare earth complex is detectable by time-resolved fluorescence.

7. The use as claimed in any one of the preceding claims, **characterized in that** the rare earth complex comprises a ligand, said ligand comprises at least one aromatic ring containing at least one nitrogen atom or sulfur atom or conjugated aromatic rings, to produce an antenna effect.

8. The use as claimed in any one of the preceding claims, **characterized in that** the petroleum product is gasoline, fuel oil, kerosene or gas oil.

9. A petroleum product, crude oil, biofuel or lubricant, **characterized in that** it comprises, as a marker, at least one rare earth complex as defined in the preceding claims and **in that** said rare earth complex is contained in the petroleum, product biofuel or lubricant at a concentration less than or equal to 1 ppm, preferably less than or equal to 100 ppb, for example between 1 ppb and 1 ppm, and notably between 10 ppb and 100 ppb.

10. A method for marking petroleum products, crude oils, biofuels or lubricants, **characterized in that** it consists essentially of adding, to a petroleum product, crude oil, biofuel or lubricant a rare earth complex or a rare earth salt, said rare earth salt being capable of forming a rare earth complex, after adding a developing solution comprising a ligand.

11. A method for detecting a rare earth complex as a marker of petroleum products, crude oils, biofuels or lubricants, **characterized in that** it comprises time-resolved fluorescence detection of the rare earth complex in a sample of petroleum product, crude oil, biofuel or lubricant.

12. The method as claimed in claim 11, **characterized in that** it comprises the following steps:
a) Preparing a sample of petroleum product, crude oil, biofuel or lubricant comprising a ligand, said ligand being capable of forming a rare earth complex detectable by time-resolved fluorescence, after adding a developing solution comprising a rare earth salt;
b) Forming the rare earth complex by adding a developing solution comprising a rare earth salt;
c) Detecting the rare earth complex by time-resolved fluorescence.

13. The method as claimed in claim 11, **characterized in that** it comprises the following steps:
a) Preparing a sample of petroleum product, crude oil, biofuel or lubricant comprising a rare earth salt, said rare earth salt being capable of forming a rare earth complex detectable by time-resolved fluorescence, after adding a developing solution comprising a ligand;
b) Forming the rare earth complex by adding a developing solution comprising a ligand;
c) Detecting the rare earth complex by time-resolved fluorescence.

14. The method as claimed in claim 11, **characterized in that** it comprises the following steps:
a) Mixing a sample of petroleum product, crude oil, biofuel or lubricant comprising, as marker, a rare earth complex detectable by time-resolved fluorescence, with an immiscible solution, preferably an aqueous solution;
b) Detecting the rare earth complex by time-resolved fluorescence of the immiscible solution.

15. The method as claimed in claim 11, **characterized in that** it comprises the following steps:
a) Impregnating a solid support with the petroleum product, crude oil, biofuel or lubricant comprising a rare earth complex as a marker;
b) Detecting the rare earth complex by time-resolved fluorescence performed on the solid support.
